# EUROPEAN PATENT APPLICATION

(11) **EP 3 499 935 A1**
(43) Date of publication of application: **19.06.2019**
(21) Application number: 17838609.0
(22) Date of filing: 01.08.2017
(51) Int. Cl.: H04W 12/06

(54) **METHOD AND SYSTEM FOR RAPIDLY CONNECTING HOTSPOT**

(30) Priority: 08.08.2016 CN 201610641528
(71) Applicant: JRD Communication Inc., Shenzhen, Guangdong 518057 (CN)
(72) Inventor: TANG, Chong, Shenzhen Guangdong 518057 (CN); WANG, Jie, Shenzhen Guangdong 518057 (CN); FANG, Binghua, Shenzhen Guangdong 518057 (CN)
(74) Representative: Petraz, Gilberto Luigi
(86) International application number: PCT/CN2017/095530
(87) International publication number: WO 2018/028479

(57) **Abstract**

A method for rapidly connecting a hotspot, comprising: when a keyboard is connected to hardware of a tablet computer and an interrupt event is triggered, the keyboard and the tablet computer unidirectionally sending identity verification information or sending same to each other and processing same so as to verify whether the keyboard matches the tablet computer; and when the keyboard matches the tablet computer, the tablet computer issuing a command for acquiring WiFi hotspot information about the keyboard, and acquiring the WiFi hotspot information about the keyboard so as to complete a WiFi connection.

## Description

### BACKGROUND

### 1. Field of the Disclosure

The present disclosure relates to the field of mobile communications, and more particularly, to a method of rapidly connecting a hotspot and a system adopting the method.

### 2. Description of the Related Art

Currently, the mobile network service is more and more popular, so the concept of mobile working gets widespread. A tablet computer and a combined keyboard are important and convenient bearers for mobile working. The mobile network is also an important factor for mobile working so at present, a two-in-one form that a tablet computer and a keyboard are packed is popular. The keyboard shares the SIM network (for instance LTE/WCDMA) to the tablet computer through Wi-Fi hotspots.

Two popular methods for connection are introduced as follows.
Method 1: The Wi-Fi scanning interface finds the searches for a hotspot established by the keyboard on the tablet computer; the correspondence Wi-Fi hotspot SSID is clicked on the tablet computer with a user's hand; the password of the Wi-Fi hotspot is entered in a popped-out password frame to complete connection.
Method 2: The user enters the Wi-Fi interface of the tablet computer, using the function of WPS (Wi-Fi protected setup). It supports two kinds of patterns: its own identity code (PIN) pattern and button (PBC) pattern. Meanwhile, the user presses down the WPS button on the keyboard so as to connect the tablet computer to the keyboard through Wi-Fi automatically.

Manual operation is required adopting the two methods, and the blocks are tedious. Especially, it is troublesome once the user forgets his/her password, and the user may feel user-unfriendly.

### SUMMARY

### Technical problem

The embodiments of the present disclosure propose a method of quickly connecting hotspots and a system adopting the method. The present disclosure realizes hot-swapping and direct connection of Wi-Fi hotspots on a keyboard and a tablet computer, which helps the users a lot.

### Solution to the technical problem

The present disclosure proposes a scheme to solve the technical problem as follows:

According to a first aspect of the present disclosure, a method of rapidly connecting a hotspot comprises:
(A) sending and processing information about identity verification uni-directionally or mutually between a keyboard and a tablet computer, verifying whether the keyboard matches the tablet computer or not upon triggering an interruption during a connection of the keyboard and the tablet computer;
(B) sending a command of acquiring the information about a Wi-Fi hotspot on the keyboard and then acquiring the information about the Wi-Fi hotspot on the keyboard by the tablet computer to complete Wi-Fi connection when the keyboard matches the tablet computer.

According to an embodiment of the present disclosure, the step A of verifying whether the keyboard matches the tablet computer or not comprises:
(A1) automatically acquiring the information about the identity verification of the keyboard by the tablet computer, or automatically sending the information about the identity verification to the tablet computer by the keyboard; verifying the information about the identity verification of the keyboard by the tablet computer;
(A2) acquiring the information about the identity verification of the tablet computer by the keyboard, or automatically sending the information about the identity verification to the keyboard by the tablet computer; verifying the information about the identity verification of the tablet computer by the keyboard;
(A3) acquiring the information about the counterpart's identity verification by the tablet computer and the keyboard separately, and verifying the acquired information about the identity verification by the tablet computer and the keyboard separately.

According to an embodiment of the present disclosure, the information about the identity verification acquired by the tablet computer and the keyboard is transmitted through a hardware interface.

According to an embodiment of the present disclosure, the step (B) further comprises:
self-verifying if the Wi-Fi hotspot is opened when the tablet computer sends the command of acquiring the information about the Wi-Fi hotspot on the keyboard; sending the information about the Wi-Fi hotspot if the Wi-Fi hotspot is opened; terminating a connecting process if the Wi-Fi hotspot is not opened.

According to an embodiment of the present disclosure, the step of sending the information about the Wi-Fi hotspot if the Wi-Fi hotspot is opened comprises: automatically verifying whether the tablet computer is connected to the keyboard or not through a hardware interface; sending the information about an only one identifier to a tablet system comprising a plurality of tablet computer if the tablet computer is connected.

According to an embodiment of the present disclosure, the step of verifying whether the keyboard and the tablet computer match nor not comprises a step of verifying if the tablet computer matches the keyboard according to the information about the only one identifier.

According to a second aspect of the present disclosure, a system of rapidly connecting a hotspot comprises:
a matching module, configured to send and process information about identity verification uni-directionally or mutually between the keyboard and the tablet computer and verify whether the keyboard matches the tablet computer when the keyboard and the tablet computer trigger interruption;
a connecting module, configured to send the command of acquiring the information about the Wi-Fi hotspot on the keyboard and acquires the information about the Wi-Fi hotspots on the keyboard to complete Wi-Fi connection when the keyboard matches the tablet computer.

According to an embodiment of the present disclosure, the matching module comprises one or more following matching units;
a first matching unit, configured to drive the tablet computer automatically acquire the information about the identity verification of the keyboard or drive the keyboard automatically send the information about the identity verification to the tablet computer; the tablet computer verifying the information about the identity verification of the keyboard;
a second matching unit, configured to drive the keyboard automatically acquire the information about the identity verification of the tablet computer or drive the tablet computer automatically send the information about the identity verification to the keyboard; the keyboard verifying the information about the identity verification of the tablet computer;
a third matching unit, configured to drive the tablet computer and the keyboard separately acquire the information that the counterpart's identity verification is verified; the tablet computer and the keyboard separately verifying the acquired the information about the identity verification.

According to an embodiment of the present disclosure, the tablet computer and the information about the identity verification acquired by the keyboard is transmitted through a hardware interface.

According to an embodiment of the present disclosure, the connecting module comprises:
a self-verifying unit, configured to drive the keyboard self-verify whether the Wi-Fi hotspots are opened or not when the tablet computer sends the command of acquiring the information about the Wi-Fi hotspots on the keyboard; if the Wi-Fi hotspots are not opened, the connecting process terminates.

According to an embodiment of the present disclosure, the self-verifying module is further configured to automatically verify whether the tablet computer is connected to the keyboard or not through the hardware interface; the information about an only one identifier is sent to a tablet system comprising a plurality of tablet computer if the tablet computer is connected.

According to an embodiment of the present disclosure, the matching module is further configured to verify whether the tablet computer and the keyboard match or nor based on the only one identifier of the keyboard.

According to a third aspect of the present disclosure, a system of rapidly connecting a hotspot comprises:
a tablet computer and a keyboard;
one or more processors;
a storage device; and
one or more application programs stored in the storage device and executed by the one or more processors to perform following steps;
(A) sending and processing information about identity verification uni-directionally or mutually between a keyboard and a tablet computer, verifying whether the keyboard matches the tablet computer or not upon triggering an interruption during a connection of the keyboard and the tablet computer;
(B) sending a command of acquiring the information about a Wi-Fi hotspot on the keyboard and then acquiring the information about the Wi-Fi hotspot on the keyboard by the tablet computer to complete Wi-Fi connection when the keyboard matches the tablet computer.

According to an embodiment of the present disclosure, when the step A of verifying whether the keyboard matches the tablet computer or not is performed, the one or more application programs are executed by the one or more processors to perform steps of:
(A1) automatically acquiring the information about the identity verification of the keyboard by the tablet computer, or automatically sending the information about the identity verification to the tablet computer by the keyboard; verifying the information about the identity verification of the keyboard by the tablet computer;
(A2) acquiring the information about the identity verification of the tablet computer by the keyboard, or automatically sending the information about the identity verification to the keyboard by the tablet computer; verifying the information about the identity verification of the tablet computer by the keyboard;
(A3) acquiring the information about the counterpart's identity verification by the tablet computer and the keyboard separately, and verifying the acquired information about the identity verification by the tablet computer and the keyboard separately.

According to an embodiment of the present disclosure, the information about the identity verification acquired by the tablet computer and the keyboard is transmitted through a hardware interface.

According to an embodiment of the present disclosure, when the step (B) is performed, the one or more application programs are executed by the one or more processors to perform steps of:
self-verifying if the Wi-Fi hotspot is opened when the tablet computer sends the command of acquiring the information about the Wi-Fi hotspot on the keyboard; sending the information about the Wi-Fi hotspot if the Wi-Fi hotspot is opened; terminating a connecting process if the Wi-Fi hotspot is not opened.

According to an embodiment of the present disclosure, when the step of sending the information about the Wi-Fi hotspot if the Wi-Fi hotspot is opened is performed, the one or more application programs are executed by the one or more processors to perform steps of: automatically verifying whether the tablet computer is connected to the keyboard or not through a hardware interface; sending the information about an only one identifier to a tablet system comprising a plurality of tablet computer if the tablet computer is connected.

According to an embodiment of the present disclosure, when the step of verifying whether the keyboard and the tablet computer match nor not is performed, the one or more application programs are executed by the one or more processors to perform a step of: verifying if the tablet computer matches the keyboard according to the information about the only one identifier.

### Benefit effect of the present disclosure

The method of rapidly connecting a hotspot and the system adopting the method proposed by the embodiments of the present disclosure adopts hardware hot-swapping connection, completes matching between the devices through the hardware, and triggers interruption according to the hardware. Accordingly, the Wi-Fi hotspots on the keyboard and the Wi-Fi hotspots on the tablet computer are successfully connected through the software. The tablet computer can automatically acquire information about the current Wi-Fi hotspots in the keyboard system by simply plugging in the corresponding keyboard, thereby automatically connecting the Wi-Fi hotspots sent by the keyboard. So the user does not need to manually input any information and enjoys using the tablet computer.

### BRIEF DESCRIPTION OF THE DRAWINGS

FIG. 1 illustrates a method for quickly connecting a tablet computer and a keyboard Wi-Fi hotspot according to an embodiment of the present disclosure.
FIG. 2 illustrates a flowchart of a method for quickly connecting a tablet computer and a keyboard Wi-Fi hotspot according to another embodiment of the present disclosure.
FIG. 3 illustrates a block diagram of a system of connecting a tablet computer and a keyboard Wi-Fi hotspot according to an embodiment of the present disclosure.
FIG. 4 illustrates a block diagram of a system of connecting a tablet computer and a keyboard Wi-Fi hotspot according to another embodiment of the present disclosure.

### DETAILED DESCRIPTION OF THE EMBODIMENTS

**The** present disclosure proposes a method and a system for quickly connecting a hotspot. More particularly, the present disclosure proposes a method and a system for quickly connecting a tablet computer and a keyboard Wi-Fi hotspot. For clarify and specify the purpose, scheme, and effect of the present disclosure, a detailed description will be disclosed by the following disclosure in conjunction with figures. However, it is understandable by persons skilled in the art that the description of the embodiments is used for understanding the invention, rather than limiting the invention.

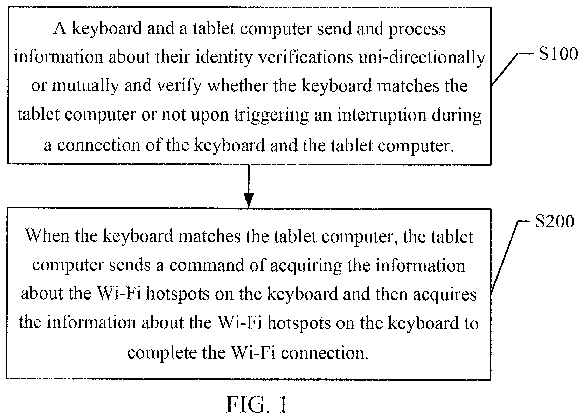

Please refer to FIG. 1 illustrating a method for quickly connecting a tablet computer and a keyboard Wi-Fi hotspot according to an embodiment of the present disclosure. Based on Wi-Fi direct connection (WDC), a Wi-Fi connecting plan that triggers an interruption via hardware and enables hot-swapping direct connection of Wi-Fi hotspots on keyboards and tablets, the hardware triggers interruption. The software implements hot-swapping direct connection of the Wi-Fi hotspot on the keyboard and the tablet computer. The method includes block S100 and block S200.

At block S100, the keyboard and the tablet computer send and process information about the identity verifications uni-directionally or mutually and verify whether the keyboard matches the tablet computer or not upon triggering an interruption during a connection of the keyboard and the tablet computer.

In other words, when the keyboard is inserted into the tablet computer, the tablet software detects the connection and determines whether the interface of the hardware of the tablet computer and the keyboard triggers the interruption. The tablet system handles the interruption, and the underlying software interrupt the report of the keyboard insertion to the software at an upper layer. Taken safe connection of the Wi-Fi hotspots into consideration, the software at an upper layer interacts with the keyboard system through the hardware interface to verify information about device verification (information about the only one identifier), and confirms whether the devices match or not.

To confirm if the devices match, the tablet computer and the keyboard may respectively acquire the displacement identifier information of the other party in a one-way manner and process them separately, or may acquire respective processing and the like to complete the matching verification between the devices. Reference is made to the specific description of the following examples.

At block S200, when the keyboard matches the tablet computer, the tablet computer sends a command of acquiring the information about the Wi-Fi hotspots on the keyboard and then acquires the information about the Wi-Fi hotspots on the keyboard to complete the Wi-Fi connection.

After the tablet computer and the keyboard complete the matching based on the information about the only one identifier, the software of the tablet computer on an upper layer sends a command for acquiring information about the Wi-Fi hotspots to the keyboard when the tablet computer matches the keyboard. After receiving the password command, the keyboard sends the information about the current Wi-Fi hotspots (including the SSID and the password) to the tablet computer. After receiving the Wi-Fi hotspot information of the keyboard, the tablet computer automatically triggers the connection on the software to trigger the Wi-Fi hotspots on the keyboard, completing the function of non-sense tablet computer automatically connected to the Wi-Fi hotspot network on the keyboard.

There are three methods for verifying whether the keyboard matches the tablet computer or not in block S100, namely:

At block S110, the tablet computer automatically acquires information about the identity verification of the keyboard, or the keyboard automatically sends the information about the identity verification to the tablet computer. The tablet computer verifies the information about the identity verification of the keyboard. That is to say, the tablet computer automatically acquires the information about the identity (the only one identifier) of the keyboard, or the keyboard automatically sends its own identity information to the tablet computer. The information about matching identity is processed in the tablet computer and further dealt with via Wi-Fi based on the matching result.

At block S120, the keyboard automatically acquires the information about the identity verification of the tablet computer, or the tablet computer automatically sends the information about the identity verification to the keyboard. The keyboard verifies the information about the identity verification of the tablet computer. That is to say, the keyboard automatically acquires the information about the identity of the tablet computer, or the tablet computer automatically sends its own identity information to the keyboard. The information about matching identity is processed in the keyboard and further dealt with via Wi-Fi based on the matching result.

At block S130, the tablet computer and the keyboard separately acquire the information about the counterpart's identity verifications, and the tablet computer and the keyboard separately verify the acquired information about the identity verification. Both of the keyboard and the tablet computer automatically acquire the device identity information of the counterpart. The process of identity information matching is handled separately in the respective systems, and further consistency matching is performed according to the mutual processing results. The information about matching identity is further dealt with via Wi-Fi based on the matching result.

It is convenient to match the above-mentioned types without interfere with one another. These types may be used as needed according to different needs or hardware settings. In addition, the information about the identity verification acquired by the tablet computer and the keyboard in the embodiment is transmitted through the hardware interface.

Block S200 further includes a block as follows.

When the tablet computer sends a command of acquiring information about the Wi-Fi hotspots on the keyboard, the keyboard self-verifies whether to open the Wi-Fi hotspots or not. If the Wi-Fi hotspots are opened the information about the Wi-Fi hotspots is sent. If the Wi-Fi hotspots are not opened, the connecting process terminates. For example, after receiving the command of acquiring the Wi-Fi hotspots from the tablet, the keyboard first verifies whether its own Wi-Fi hotspots are opened normally. If the Wi-Fi hotspots are already opened, send the information about the Wi-Fi hotspots (including SSID, encryption, and password) to the tablet computer to complete the Wi-Fi connection. If the Wi-Fi hotspots are not opened, the information that the Wi-Fi hotspots are not opened is sent to the tablet computer, and the program terminates.

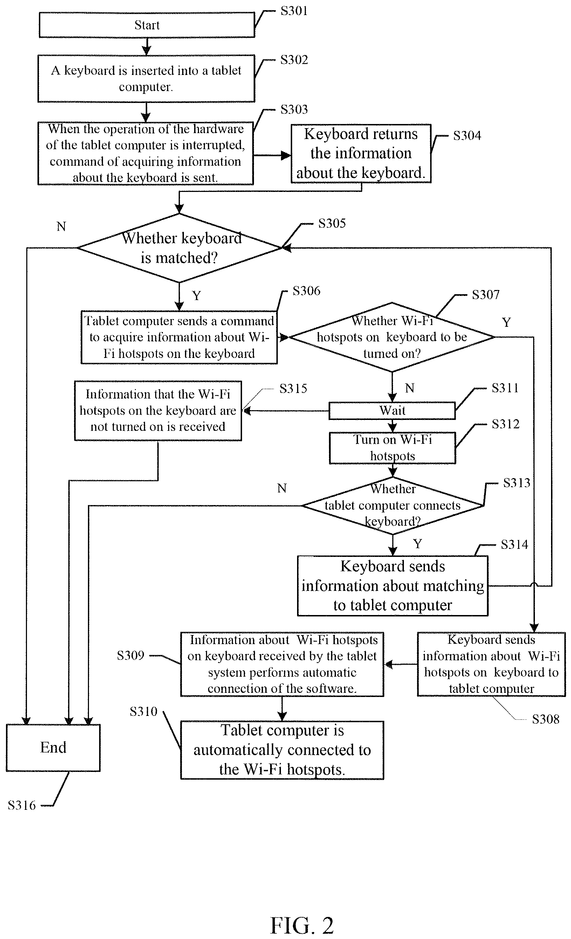

The present disclosure will be further described below in conjunction with a flowchart illustrated in FIG. 2 according to the embodiment of the present disclosure. FIG. 2 illustrates the method including block S301, block S302, block S303, block S304, block S3051, block S306, block S307, block S308, block S309, block S310, block S311, block S312, block S313, block S314, block S315, and block S316.

At block S301, the operation starts.

At block S302, a keyboard is inserted into a tablet computer. The keyboard is inserted into the tablet through a hardware interface. The hardware interface is powered on to so that the hardware interrupts. The tablet system detects the interruption of the hardware interface.

At block S303, when the operation of the hardware of the tablet computer is interrupted, the system software sends a command of acquiring information about the keyboard to the keyboard. The command is transmitted to the keyboard system through the connected hardware interface. The tablet automatically acquires the information about the Wi-Fi hotspots on the keyboard by the instantaneous interruption of the insertion of the keyboard, thereby avoiding waste of the central processing unit (CPU) resources due to continuous software polling mechanism.

At block S304, the keyboard receives the command and returns the information about the keyboard. After receiving the command, the keyboard system sends the information about the only one identifier of the keyboard to the tablet system through the hardware interface.

At block S305, the tablet computer is verified to match the keyboard or not. According to the information about the only one identifier of the keyboard, the tablet system verifies if the tablet computer matches the keyboard. If yes, block S306 is performed; otherwise, block S316 is performed.

At block S306, the tablet computer sends a command to acquire information about Wi-Fi hotspots on the keyboard.

At block S307, it is determined whether the Wi-Fi hotspots on the keyboard to be turned on or not. If yes, block S308 is performed; otherwise, block S311 is performed.

At block S308, the keyboard sends the information about the Wi-Fi hotspots on the keyboard to the tablet computer. The information about the Wi-Fi hotspots on the keyboard is sent to the tablet system.

At block S309, the information about the Wi-Fi hotspots on the keyboard received by the tablet system performs automatic connection of the software.

At block S310, the tablet computer is automatically connected to the Wi-Fi hotspots successfully.

At block S311, the keyboard is anticipated to enable the Wi-Fi hotspot function. If block S315 is not performed, the tablet computer automatically terminates after the tablet computer receives information that the Wi-Fi hotspots in the keyboard system are not opened. While the Wi-Fi hotspots of the keyboard system are opened, whether the tablet computer is connected to the keyboard or not is automatically detected by detecting the state of the hardware interface. If the tablet computer does be connected to the keyboard, the tablet system is given the information about the only one identifier, and block S314 restarts. If the tablet computer is not connected to the keyboard, the process of sending the information about the only one identifier terminates, and the process that the Wi-Fi hotspot is are as usual operates normally.

At block S312, the Wi-Fi hotspots are opened.

At block S313, the tablet computer is verified to remain connected to the keyboard or not.

At block S314, the keyboard sends information about matching to the tablet computer, and block S305 is performed again.

At block S315, information that the Wi-Fi hotspots on the keyboard are not turned on is received, and block S316 is performed.

At block S316, the operation finishes.

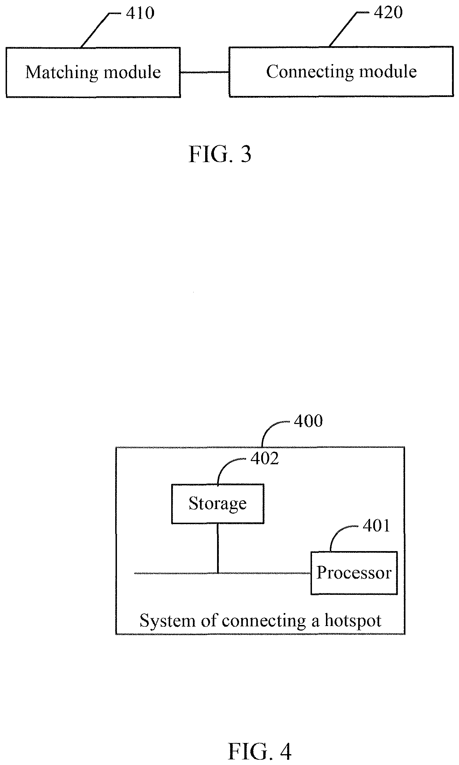

The present disclosure further proposes a system for implementing a method of quickly connecting a tablet computer to the Wi-Fi hotspots on a keyboard, as illustrated in FIG. 3. The system includes a matching module 410 and a connecting module 420. The system also comprises one or more processors and a storage device for storing a plurality of instruction programs executable by the one or more processors. The plurality of instruction programs includes the matching module 410 and the connecting module 420 executable by the one or more processors to perform functions as disclosed hereafter.

The matching module 410 is configured to send and process the information about the identity verification uni-directionally or mutually between the keyboard and the tablet computer and verify whether the keyboard matches the tablet computer when the connection of the keyboard and the tablet computer trigger interruption;

The software of the tablet computer is independent. The software of the keyboard is independent as well. The tablet computer and the keyboard are configured to send commands, process requests, and responds to the commands. The information about the identity verification acquired by the tablet computer and the keyboard is transmitted through the hardware interface. The tablet computer is inserted into the keyboard through the hardware. The hardware is interrupted after the hardware interface is electrified. Once the software of the tablet computer determined that the hardware is interrupted, the software sends the command of acquiring the information about the keyboard. The information is sent to the keyboard through the connected hardware interface. After the keyboard receives the command, the information about the only one identifier of the keyboard is sent to the tablet computer through the hardware interface. The tablet computer verifies whether the tablet computer matches the keyboard or not according to the only one identifier of the keyboard. If yes, the tablet computer sends the command of the acquiring information about the Wi-Fi hotspots on the keyboard to connect Wi-Fi. If not, the program terminates.

The connecting module 420 is configured to send a command of acquiring information about the Wi-Fi hotspots on the keyboard and acquires the information about the Wi-Fi hotspots on the keyboard to complete Wi-Fi connection when the keyboard matches the tablet computer.

In other words, the keyboard verifies whether its own Wi-Fi hotspots are normally opened or not after the keyboard receives the command of acquiring the information about the Wi-Fi hotspots from the tablet computer. The connecting module 420 includes a self-verifying unit. The self-verifying unit is configured to drive the keyboard self-verify whether the Wi-Fi hotspots are opened or not when the tablet computer sends the command of acquiring the information about the Wi-Fi hotspots on the keyboard. If the Wi-Fi hotspots are opened, the information about the Wi-Fi hotspots is sent. If the Wi-Fi hotspots are opened, the information about the Wi-Fi hotspots is sent. If the Wi-Fi hotspots are not opened, the connecting process terminates. The keyboard firstly verifies whether its own Wi-Fi hotspots are normally opened or not. If the Wi-Fi hotspots are opened, the information about the Wi-Fi hotspots is sent to the tablet computer to connect Wi-Fi. If the Wi-Fi hotspots are not opened, the information that the Wi-Fi hotspots are not opened is sent to the tablet computer and the connecting process automatically terminates.

When the Wi-Fi hotspot connects, the software in the tablet computer software system automatically connects to the Wi-Fi hotspot according to the information about the Wi-Fi hotspot to perform the function of the WDC automatically connecting to the Wi-Fi hotspot.

After the tablet computer receives the information that the Wi-Fi hotspots on the keyboard do not open, the program automatically terminates. While the Wi-Fi hotspots on the keyboard are opening, the hardware interface automatically verifies if the tablet computer is connected to the keyboard. If the tablet computer is connected, the information about the only one identifier is sent to the tablet system to verify matching. If the tablet computer is not connected, the information about the only one identifier is sent to terminate while the function of the Wi-Fi hotspot is normally conducted.

Further, to ensure the security of the connecting process, the identity information (information about the only one identifier) about the tablet computer and the identity information (information about the only one identifier) about the keyboard needs to match. The matching module includes one or more matching unit as follows.

A first matching unit is configured to configured to drive the tablet computer automatically acquire information about the identity verification of the keyboard or drive the keyboard automatically send information about the identity verification to the tablet computer. The tablet computer verifies the information about the identity verification of the keyboard. In other words, the tablet computer automatically acquires the information about the identity of the keyboard, or the keyboard automatically sends the information about its own identity to the tablet computer. The information about matching identity is processed in the tablet computer and further dealt with based on the matching result.

A second matching unit is configured to drive the keyboard automatically acquire information about the identity verification of the tablet computer or drive the tablet computer automatically send information about the identity verification to the keyboard. The keyboard verifies the information about the identity verification of the tablet computer. In other words, the tablet computer automatically acquires the information about the identity of the keyboard, or the keyboard automatically sends the information about its own identity to the tablet computer. The information about matching identity is processed in the tablet computer and further dealt with based on the matching result.

A third matching unit is configured to drive the tablet computer and the keyboard separately acquire the information that the counterpart's identity verification is verified. In other words, the keyboard automatically acquires the information about the identity of the tablet computer, or the tablet computer automatically sends information about personal identity to the keyboard. The information about matching identity is processed in the keyboard and further dealt with based on the matching result.

In conclusion, the method of rapidly connecting a hotspot and the system adopting the method proposed by the embodiments of the present disclosure adopts hardware hot-swapping connection, completes matching between the devices through the hardware, and triggers interruption according to the hardware. Accordingly, the Wi-Fi hotspots on the keyboard and the Wi-Fi hotspots on the tablet computer are successfully connected through the software. The tablet computer can automatically acquire information about the current Wi-Fi hotspots in the keyboard system by simply plugging in the corresponding keyboard, thereby automatically connecting the Wi-Fi hotspots sent by the keyboard. So the user does not need to manually input any information and enjoys using the tablet computer.

As FIG. 4 illustrates, the person skilled in the related art may understand that the total blocks or a part of the blocks which the above-mentioned methods include may be conducted by commanding the related hardware. The program may be stored in a readable storage medium. The storage medium may be a read-only memory (ROM), a random access memory (RAM), a magnetic disc, an optical disc, etc.

The present disclosure is described in detail in accordance with the above contents with the specific preferred examples. However, this present disclosure is not limited to the specific examples. For the ordinary technical personnel of the technical field of the present disclosure, on the premise of keeping the conception of the present disclosure, the technical personnel can also make simple deductions or replacements, and all of which should be considered to belong to the protection scope of the present disclosure.

## Claims

1. A method of rapidly connecting a hotspot, **characterized in that** the method comprises:
(A) sending and processing information about identity verification uni-directionally or mutually between a keyboard and a tablet computer, verifying whether the keyboard matches the tablet computer or not upon triggering an interruption during a connection of the keyboard and the tablet computer;
(B) sending a command of acquiring the information about a Wi-Fi hotspot on the keyboard and then acquiring the information about the Wi-Fi hotspot on the keyboard by the tablet computer to complete Wi-Fi connection when the keyboard matches the tablet computer.

2. The method of claim 1, **characterized in that** the step A of verifying whether the keyboard matches the tablet computer or not comprises:
(A1) automatically acquiring the information about the identity verification of the keyboard by the tablet computer, or automatically sending the information about the identity verification to the tablet computer by the keyboard; verifying the information about the identity verification of the keyboard by the tablet computer;
(A2) acquiring the information about the identity verification of the tablet computer by the keyboard, or automatically sending the information about the identity verification to the keyboard by the tablet computer; verifying the information about the identity verification of the tablet computer by the keyboard;
(A3) acquiring the information about the counterpart's identity verification by the tablet computer and the keyboard separately, and verifying the acquired information about the identity verification by the tablet computer and the keyboard separately.

3. The method of claim 2, **characterized in that** the information about the identity verification acquired by the tablet computer and the keyboard is transmitted through a hardware interface.

4. The method of claim 1, **characterized in that** the step (B) further comprises:
self-verifying if the Wi-Fi hotspot is opened when the tablet computer sends the command of acquiring the information about the Wi-Fi hotspot on the keyboard; sending the information about the Wi-Fi hotspot if the Wi-Fi hotspot is opened; terminating a connecting process if the Wi-Fi hotspot is not opened.

5. The method of claim 4, **characterized in that** the step of sending the information about the Wi-Fi hotspot if the Wi-Fi hotspot is opened comprises: automatically verifying whether the tablet computer is connected to the keyboard or not through a hardware interface; sending the information about an only one identifier to a tablet system comprising a plurality of tablet computer if the tablet computer is connected.

6. The method of claim 1, **characterized in that** the step of verifying whether the keyboard and the tablet computer match nor not comprises a step of verifying if the tablet computer matches the keyboard according to the information about the only one identifier.

7. A system of rapidly connecting a hotspot, **characterized in that** the system comprises:
an electronic device and a keyboard;
one or more processors;
a storage device; and
one or more application programs stored in the storage device and executed by the one or more processors;
a matching module, configured to send and process information about identity verification uni-directionally or mutually between the keyboard and the tablet computer and verify whether the keyboard matches the tablet computer when the keyboard and the tablet computer trigger interruption;
a connecting module, configured to send the command of acquiring the information about the Wi-Fi hotspot on the keyboard and acquires the information about the Wi-Fi hotspots on the keyboard to complete Wi-Fi connection when the keyboard matches the tablet computer.

8. The system of claim 7, **characterized in that** the matching module comprises one or more following matching units;
a first matching unit, configured to drive the tablet computer automatically acquire the information about the identity verification of the keyboard or drive the keyboard automatically send the information about the identity verification to the tablet computer; the tablet computer verifying the information about the identity verification of the keyboard;
a second matching unit, configured to drive the keyboard automatically acquire the information about the identity verification of the tablet computer or drive the tablet computer automatically send the information about the identity verification to the keyboard; the keyboard verifying the information about the identity verification of the tablet computer;
a third matching unit, configured to drive the tablet computer and the keyboard separately acquire the information that the counterpart's identity verification is verified; the tablet computer and the keyboard separately verifying the acquired the information about the identity verification.

9. The system of claim 8, **characterized in that** the tablet computer and the information about the identity verification acquired by the keyboard is transmitted through a hardware interface.

10. The system of claim 7, **characterized in that** the connecting module comprises:
a self-verifying unit, configured to drive the keyboard self-verify whether the Wi-Fi hotspots are opened or not when the tablet computer sends the command of acquiring the information about the Wi-Fi hotspots on the keyboard; if the Wi-Fi hotspots are not opened, the connecting process terminates.

11. The system of claim 10, **characterized in that** the self-verifying module is further configured to automatically verify whether the tablet computer is connected to the keyboard or not through the hardware interface; the information about an only one identifier is sent to a tablet system comprising a plurality of tablet computer if the tablet computer is connected.

12. The system of claim 7, **characterized in that** the matching module is further configured to verify whether the tablet computer and the keyboard match or nor based on the only one identifier of the keyboard.

13. A system of rapidly connecting a hotspot, **characterized in that** the system comprises:
a tablet computer and a keyboard;
one or more processors;
a storage device; and
one or more application programs stored in the storage device and executed by the one or more processors to perform following steps;
(A) sending and processing information about identity verification uni-directionally or mutually between a keyboard and a tablet computer, verifying whether the keyboard matches the tablet computer or not upon triggering an interruption during a connection of the keyboard and the tablet computer;
(B) sending a command of acquiring the information about a Wi-Fi hotspot on the keyboard and then acquiring the information about the Wi-Fi hotspot on the keyboard by the tablet computer to complete Wi-Fi connection when the keyboard matches the tablet computer.

14. The system of claim 13, **characterized in that** when the step A of verifying whether the keyboard matches the tablet computer or not is performed, the one or more application programs are executed by the one or more processors to perform steps of:
(A1) automatically acquiring the information about the identity verification of the keyboard by the tablet computer, or automatically sending the information about the identity verification to the tablet computer by the keyboard; verifying the information about the identity verification of the keyboard by the tablet computer;
(A2) acquiring the information about the identity verification of the tablet computer by the keyboard, or automatically sending the information about the identity verification to the keyboard by the tablet computer; verifying the information about the identity verification of the tablet computer by the keyboard;
(A3) acquiring the information about the counterpart's identity verification by the tablet computer and the keyboard separately, and verifying the acquired information about the identity verification by the tablet computer and the keyboard separately.

15. The system of claim 13, **characterized in that** the information about the identity verification acquired by the tablet computer and the keyboard is transmitted through a hardware interface.

16. The system of claim 13, **characterized in that** when the step (B) is performed, the one or more application programs are executed by the one or more processors to perform steps of:
self-verifying if the Wi-Fi hotspot is opened when the tablet computer sends the command of acquiring the information about the Wi-Fi hotspot on the keyboard; sending the information about the Wi-Fi hotspot if the Wi-Fi hotspot is opened; terminating a connecting process if the Wi-Fi hotspot is not opened.

17. The system of claim 16, **characterized in that** when the step of sending the information about the Wi-Fi hotspot if the Wi-Fi hotspot is opened is performed, the one or more application programs are executed by the one or more processors to perform steps of: automatically verifying whether the tablet computer is connected to the keyboard or not through a hardware interface; sending the information about an only one identifier to a tablet system comprising a plurality of tablet computer if the tablet computer is connected.

18. The system of claim 13, **characterized in that** when the step of verifying whether the keyboard and the tablet computer match nor not is performed, the one or more application programs are executed by the one or more processors to perform a step of: verifying if the tablet computer matches the keyboard according to the information about the only one identifier.
